# EUROPEAN PATENT APPLICATION

(11) **EP 0 702 463 A2**
(43) Date of publication of application: **20.03.1996**
(21) Application number: 95306210.6
(22) Date of filing: 06.09.1995
(51) Int. Cl.: H04B 10/155

(54) **Improved subcarrier multiple access passive optical network**

(30) Priority: 15.09.1994 US 306287
(71) Applicant: AT&T Corp., New York, NY 10013-2412 (US)
(72) Inventor: Austin, Richard F., North Middletown, New Jersey 07734 (US); Wood, Thomas Huntington, Holmdel, New Jersey 07733 (US); Feldman, Robert D., Red Bank, New Jersey 07701 (US)
(74) Representative: Watts, Christopher Malcolm Kelway, Dr.

(57) **Abstract**

Adjacent channel interference at an optical receiver of an optical network is significantly reduced using electrical bandwidth limiting means at optical transmitters of the network which narrow the bandwidth of the modulated subcarrier signal transmitted from the optical transmitters. An optical transmitter is responsive to an input data signal to generate (57) a modulated subcarrier signal having a power density spectrum which includes substantially all of the main lobe and significantly attenuated side lobes of the modulated carrier signal. The modulated subcarrier signal is then used to modulate (57, 55) an optical source signal transmitted from the optical transmitter.

## Description

### Technical Field

This invention relates to lightwave transmission systems and, more particularly, to an improved subcarrier multiple access passive optical network.

### Background of the Invention

The deployment of optical fiber in the telephone access network has recently been accelerating. One of the more popular architectures uses a passive optical network (PON). The current generation of PONs is intended to be upgradeable to broadband service delivery. Any such upgrade must deliver transmission rates suitable for a realistic set of target services at the lowest possible cost. One such cost-effective broadband PON architecture that incorporates coarse wavelength division multiplexing (WDM) to separate upstream and downstream traffic, time division multiplexing (TDM), and subcarrier multiple access (SCMA) is described in our article "Demonstration of a Cost-Effective, Broadband Passive Optical Network System," IEEE Photonics Technology Letters, Vol. 6, No. 4, pp. 575-578, April 1994, and U.S. patent number 5,311,344 which issued on May 10, 1994 to T. H. Wood and P. P. Bohn.

In an actual deployment, a PON may have distributed optical splitters, and there will be variations in the distance from each optical network unit (ONU) to the central office. As a result, there can be large differences in the optical powers (15 - 20 dB) received in the upstream direction from each ONU. While the problems associated with this large dynamic range have been solved for narrowband time division multiple access (TDMA) PONs, the dynamic range problem still exists for PONs that incorporate SCMA. In an SCMA system, large variations in received power can lead to serious adjacent channel interference (ACI) when a very strong channel is adjacent to a much weaker one.

### Summary of the Invention

We have recognized that adjacent channel interference--or, more generally, interchannel interference--in optical networks can be significantly reduced using electrical bandwidth limiting means at the optical transmitter of each ONU. In accordance with the present invention, an optical transmitter includes means for generating a modulated electrical subcarrier signal in response to an input signal, the generating means including electrical bandwidth limiting means for narrowing the bandwidth of the modulated electrical subcarrier signal to a predetermined power density spectrum. An optical source signal is then modulated using the modulated electrical subcarrier signal.

According to another aspect of the invention, the modulated electrical subcarrier signal has a predetermined power density spectrum characteristic which includes substantially all of the main lobe and significantly attenuated side lobes of the modulated electrical subcarrier signal.

According to the invention, a modulated electrical subcarrier passive optical network is arranged to include a plurality of electrical subcarrier modulated optical transmitters, each operating at a different subcarrier frequency, and an optical receiver for receiving a modulated electrical subcarrier frequency from the optical transmitters, wherein at least one of the optical transmitters includes electrical means for limiting the interchannel interference in the receiver caused by the modulated electrical subcarrier frequency of said at least one optical transmitter.

According to another feature, the modulated electrical subcarrier signal has a substantially reduced power density spectrum characteristic at frequencies more than 0.5 times a channel spacing.

### Brief Description of the Drawing

FIG. 1 shows an illustrative simplified block diagram of a passive optical network, utilizing subcarrier multiple access (SCMA) in accordance with the principles of the present invention;
FIG. 2 shows the adjacent channel interference that exists in prior art SCMA-type PON networks;
FIG. 3 shows the reduction in adjacent channel interference using our improved optical transmitter shown in FIG. 1;
FIG. 3A shows an illustrative upstream optical spectrum for a prior art SCMA-type PON network;
FIG. 4 shows illustrative bit error rate reduction using our improved optical transmitter of FIG. 1;
FIGS. 5-8 show illustrative block diagrams of alternate embodiments of the frequency shift keying (FSK) transmitter unit of the ONU shown in FIG. 1;
FIGS. 9-12 show illustrative block diagrams of a variety of binary phased shift keying (BPSK) transmitter units which can be utilized in an ONU;
FIGS. 13-17 show illustrative block diagrams of a variety of quadrature phased shift keying (QPSK) transmitter units which can be utilized in an ONU; and
FIG. 18 shows an illustrative block diagram of an amplitude shift keying (ASK) transmitter unit which can be utilized in an ONU.

### Detailed Description

Subcarrier multiple access (SCMA) systems offer several attractive features. They use simple radio techniques, require no synchronization, make little demand on laser linearity, and can be scaled to very high bit rates. However, the incapability of an SCMA system to operate in the presence of strong adjacent channel interference has been one shortcoming in establishing its practicality for use in a passive optical network (PON).

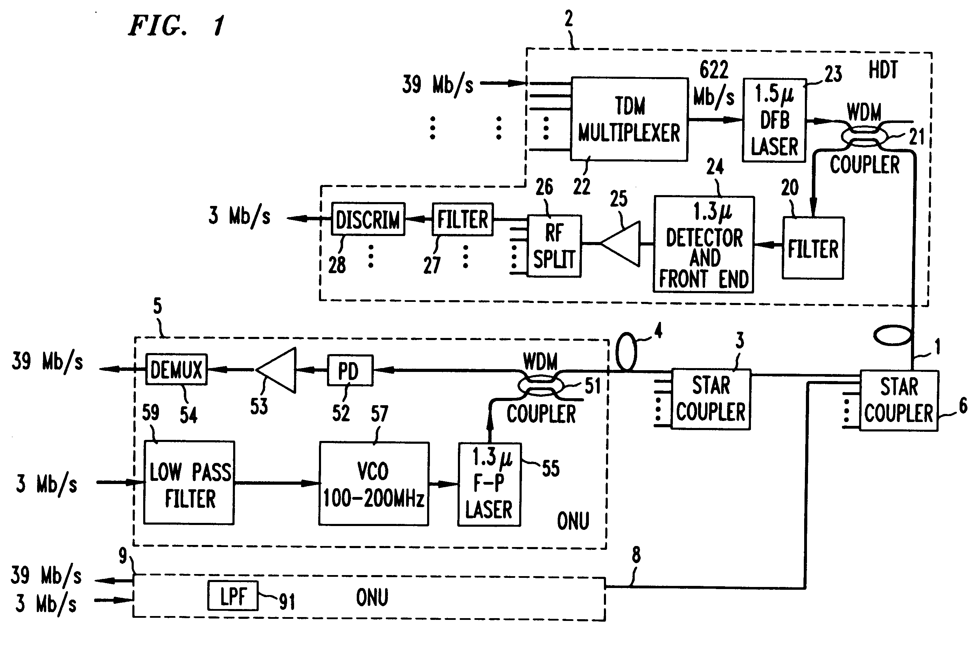

With reference to FIG. 1, we describe the operation of a prior art SCMA type PON network and our improved SCMA optical transmitter. Many PON networks use a "fiber to the home or curb" (FTTH or FTTC) architecture, where one or more transport optical fibers connect an exchange or central office at the head end terminal, e.g., HDT 2, of the network to pedestals (e.g., star couplers 3 and 6) serving ONUs (e.g., 5 and 9) at the remote end of the network. The illustrative PON of FIG. 1 provides 39 million bits per second (Mb/s) downstream to each of sixteen optical network units (ONUs). Each ONU illustratively transmits 3 Mb/s upstream to the head end terminal HDT 2. Our improved SCMA optical transmitter adds a low pass filter (e.g., 59) to the inbound service transmitter (i.e., 55 and 57) of an ONU as described in the previously referenced article and U.S. patent.

In FIG. 1, an illustrative optical transport fiber 1 connects head end terminal HDT 2 with passive, wavelength-independent optical star couplers 3 and 6. The outbound and inbound transmission wavelengths are 1.5µ*m* and 1.3µ*m*, respectively. Short lengths of optical fiber 4 connect the outputs of the pedestal (i.e., coupler 3) with respective distant subscriber terminals ONU 5 normally located on subscriber premises. Illustratively, each ONU receives a high-speed data signal (39 Mb/s) on the outbound service and transmits a moderately high-speed data signal (3 Mb/s) on the inbound service. It should be noted that each ONU can serve one or more subscribers.

The head end terminal HDT 2 includes an outbound service transmitter, an inbound service receiver, and a wavelength selective coupling element (WDM) 21 for connecting the service to and from the transport fiber. As such, the head end terminal operates as a transceiver. Wavelength selective coupling element 21 is used for launching the 1.5µ*m* wavelength band for outbound transmission, and for extracting the 1.3µ*m* wavelength band for inbound transmission. While FIG. 1 shows only one inbound service receiver, it should be noted that multiple receivers can be connected to fiber 1, each operating, for example, at different wavelengths.

Outbound service transmitter includes multiplexer 22 and laser 23. Outbound service is provided by time-division multiplexing sixteen 39 Mb/s baseband signals into a single 622 Mb/s baseband signal using multiplexer 22. Electro-optical conversion of this baseband signal is accomplished by directly modulating laser 23. External modulation of laser 23 is not shown in FIG. 1 but is contemplated for use therewith as a substitute for direct modulation. The output from laser 23 is optically coupled into wavelength selective coupler 21 wherein the outbound optical signal is coupled over to the coupler output port connected to transport fiber 1.

Laser 23 is exemplarily realized as a 1.5µ*m* distributed feedback (DFB) laser. This type of laser is quite common and exhibits an inherently single-mode spectral response. While the present invention has been described using a DFB laser, other types, e.g., Fabry-Perot, may be utilized.

As described above, coupler 21 is also connected between the transport fiber 1 and the inbound service receiver. The inbound service receiver includes optical filter 10, photodetector 24, amplifier 25, RF power splitter 26, bandpass filters 27, and discriminators 28.

Optical filter 20 is used , if necessary, to remove any reflected 1.5µ*m* optical signals outputted from coupler 21. Photodetector 24 converts the received inbound signal from filter 20 into an electrical signal which is then amplified by amplifier 25. The optical inbound signal, as will be discussed in more detail below, comprises a group of subcarrier multiplexed signals, one subcarrier per ONU, propagating in transport fiber 1. Splitter 26 has one input port and at least one output port corresponding to each ONU. Since there are sixteen ONUs in FIG. 1, the RF splitter has sixteen output ports. Splitter 26 distributes substantially equal amounts of the signal at the input port to each output port. From the splitter 26, the signals are frequency demultiplexed to recover the ONU signals which were previously subcarrier multiplexed. In this arrangement, bandpass filter 27 and discriminator 28 cooperate to recover a particular ONU signal. For example, the bandpass filter 27 is tuned to extract the signals from ONU 5. Bandpass filter 27 has a bandwidth of about 3 MHz. Discriminator 28 has a delay line discriminator for converting the received signals from frequency-shift keying (FSK) to amplitude-shift keying (ASK). Inbound service signals for a particular subscriber are output from discriminator 28.

The passive pedestals connect at the remote end of the transport fiber 1. One exemplary embodiment of passive pedestals is shown in FIG. 1 as star couplers 3 and 6. Star couplers 3 and 6 provide the dual functions of distributing signals to the subscriber terminals and combining signals from the subscriber terminals. Optical fibers 4 and 8 connect the star couplers 3 and 6, respectively, to the subscriber terminals ONUs 5 and 9, respectively. As shown, ONU 5 connects via two star couplers (3 and 6) while ONU 9 connects via one star coupler 6 to the head end terminal HDT 2.

Each subscriber terminal, e.g., ONU, includes an outbound service receiver, an inbound service transmitter, and a wavelength selective coupling element 51. As such, the subscriber terminal is a transceiver. Wavelength selective coupling element 51 is necessary for launching the 1.3µm wavelength band for inbound transmission, and for extracting the 1.5µm wavelength band for outbound transmission.

The outbound service receiver of ONU 5 includes photodetector 52, amplifier 53, and time-division multiplexer 54 for recovering the information from the time slots assigned to a corresponding subscriber. Photodetector 52, illustratively, is a Positive Intrinsic Negative (PIN) photodetector which converts the received, broadband, outbound service signal from the optical to the electrical domain. Amplifier 53, such as a GaAs transimpedance amplifier, increases the power in the signal output from the detector. Demultiplexer 54 provides the necessary time-division demultiplexing to recover the signal destined for the associated subscriber. That is, demultiplexer 54 in our example extracts one 39 Mb/s channel of the 622 Mb/s outbound signal sent from a head end terminal HDT 2.

The prior art inbound service transmitter in each subscriber terminal, e.g., ONU 5, included (as shown in U.S. patent 5,311,344) an equalizer which was used as a high pass filter. Note that the present invention uses a low pass filter 59 instead of that equalizer.

Voltage-controlled oscillator 57 is tuned to a center frequency corresponding to the assigned subcarrier for the associated subscriber. The voltage-controlled oscillator 57 responds to the data at the subscriber terminal input to produce an FSK output at the designated subcarrier frequency. The FSK output signal is applied to a laser 55 for directly modulating the laser. In one example, laser 55 is realized as a Fabry-Perot laser operating in the 1.3µ*m* band.

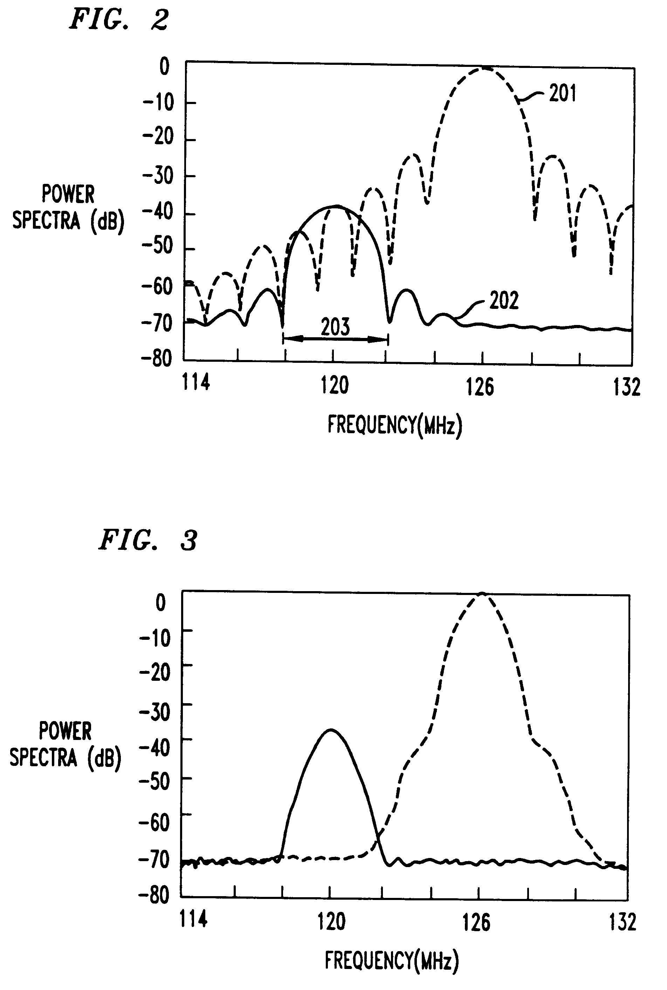

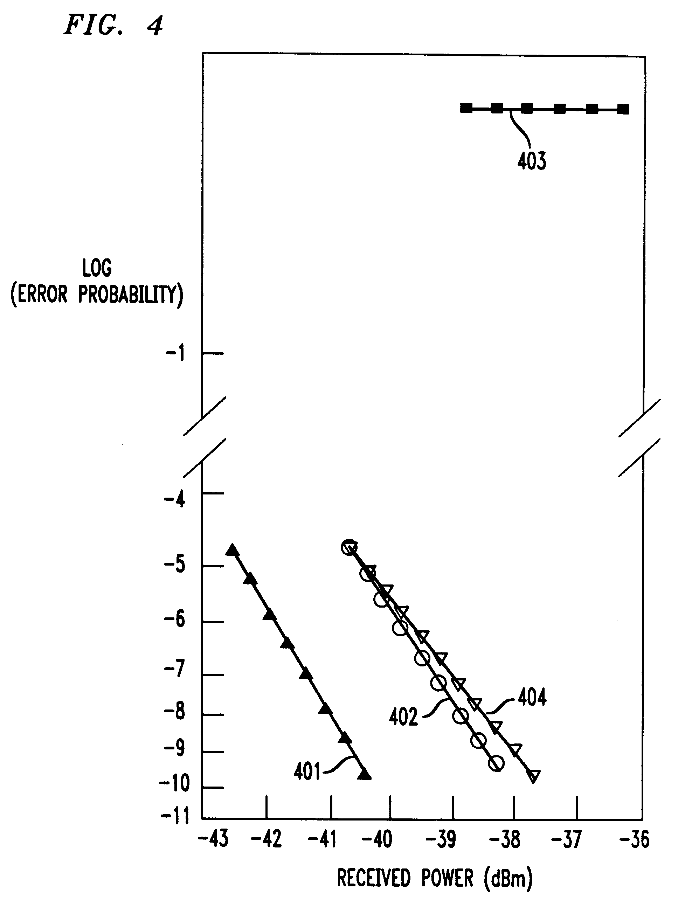

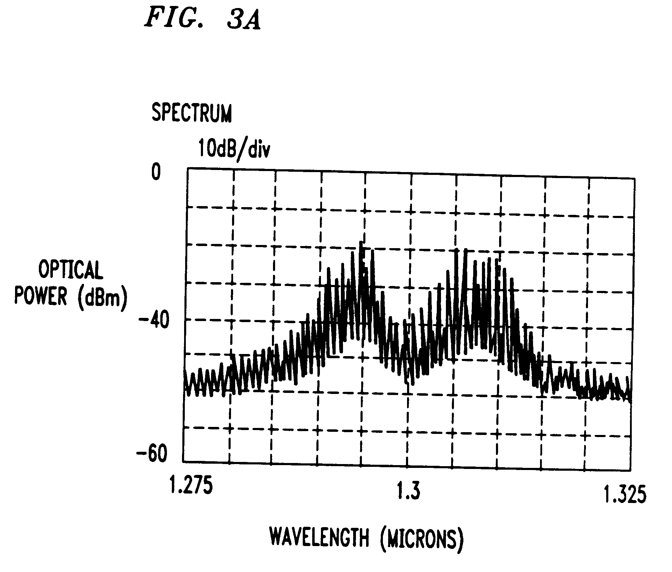

FIG. 3A shows, illustratively, an upstream optical spectrum for a SCMA type PON network, such as that shown in FIG. 1, including seven ONUs each with a Fabry-Perot laser operating in the 1.3µ*m* wavelength band. Each laser operates at a different power level and is modulated with a different subcarrier signal. As previously discussed, such an SCMA system suffers from strong adjacent channel and/or interchannel interference. However, viewing the upstream optical spectrum of FIG. 3A gives no indication of the level of adjacent channel interference or how to eliminate it. We have recognized that the optical spectrum shown in FIG. 3A is quite different in structure from the electrical spectra for the ONU subcarrier frequencies shown in FIG. 2. We have realized that adjacent channel interference can be readily determined from the electrical spectra shown in FIG. 2 and can be substantially reduced in an SCMA type PON network by using electrical filtering at each ONU.

In accordance with the present invention, a low pass filter 59 is added to the transmitter section of ONU 5 to filter the subscriber's 3 Mb/s data input signal. In one arrangement, the filter 59 may be implemented using an 8-section low pass Bessel filter. Alternatively, a multisection low pass Gaussian filter can be used. Those filters can be implemented using analog components (capacitors, inductors, etc.) or using a digital signal processor.

With joint reference to FIGS. 1, 2 and 3, we describe the improved adjacent channel interference performance obtained by adding the filter 59 to the transmitter section of ONU 5. As previously discussed, in an actual deployment, a PON may have distributed star couplers 3 and 6 leading to different splitting losses for different ONUs. There may also be large variations in the distance from each optical network unit (ONU) to the central office. For example, ONU 9's optical fiber paths 8 and 1 may be much shorter than that for ONU 5. Hence, the optical signal loss from ONU 5 through fiber 4 and star couplers 3 and 6 may be much greater than for ONU 9. As a result, there can be large differences in the optical powers (15 - 20 dB) received at HDT 2 in the inbound direction from ONUs 5 and 9.

Fig. 2 shows, illustratively, adjacent channel interference results for a prior art PON network of FIG. 1 (i.e., one without low pass filter 59). In FIG. 2, the RF frequency spectra from ONU 5 and ONU 9, each with an FM modulation index of 0.5, are illustratively shown with carrier frequencies of 120 and 125 MHz, respectively. The measured channel from ONU 5 has a carrier frequency of 120 MHz, and the interfering channel from ONU 9 is at 126 MHz, for a channel spacing of 6 MHz = 2 x B where B is the bit rate (3 Mb/s in our example) of the subscriber input data. The subscriber input data may be any type of digital data, but for illustrative purposes herein a Non-Return-Zero (NRZ) baseband data signal is utilized.

The FM modulation index of 0.5 produces, in the absence of LPF 59 filtering, the minimum shift key spectrum shown by 201 and 202. A bandpass filter 20 in HDT 2 that is used to pass the main lobe 203 of the desired 120 MHz channel will unfortunately also pass large amounts of interfering power, i.e., the side lobes, from the 126 MHz channel, and low bit error rates will not be possible. The 120 MHz channel, from ONU 5, which is the channel being measured, is 36 dB weaker than the interfering channel from ONU 9. The 36 dB difference in electrical power corresponds to a difference of 18 dB in received optical power.

In accordance with the present invention, a low pass filter (LPF) 59 is added in each ONU to filter the subscriber input data signal. Hence, in our illustrative network of FIG. 1, ONU 5 has low pass filter 59 and ONU 9 has low pass filter 91. The LPF 59 has a transfer function which filters the input data signal so that the resulting power density spectrum of the modulated carrier signal out of VCO 57 includes substantially all of the main lobe and significantly attenuated side lobes of the modulated carrier signal. As shown by a comparison of FIG. 2 and FIG. 3, all of the interfering 126 MHz channel side lobe signals are attenuated, e.g., the first side lobe is attenuated, from about -25 dB to about -45 dB. The LPF 59 is designed so that the interfering modulated carrier signal (e.g., the 126 MHz channel signal) has a substantially reduced power density spectrum characteristic at frequencies more than 0.5 times a channel spacing from a subcarrier frequency. The channel spacing is defined as the minimum spacing to a subcarrier frequency of the other optical transmitters that can be received by the same receiver at the same time.

These LPF filters, illustratively, are 8-section, low pass Bessel filters having a 3 dB cutoff frequency (*f*_{*c*}) of 1.2 MHz. Thus the ratio ^{*f*_{*c*}}/_{*B*} , where ***B*** is the bit rate, is 0.4. The filtered input data is fed into a voltage-controlled oscillator (e.g., 57) to produce a frequency shift keyed (FSK) signal which then modulates a low-cost, uncooled Fabry-Perot laser (e.g., 55) with an optical modulation index of ∼1.0 and a launched power of -6 dB.

Filtering the baseband input data reduces the bandwidth of each channel, as shown in FIG. 3. The low pass filter 91 of ONU 9 has significantly reduced all of the side lobes and some of the main lobe of the 126 MHz interference signal. The result is that the channel bandpass filter 27 in HDT 2 can now adequately separate the desired 120 MHz signal from the interference 126 MHz signal.

Generally, the low pass filter in each ONU 5 and 9 of the PON network of FIG. 1 is selected to have roll-off (loss versus frequency) characteristic which, depending on the bit rate of the input data signal, the FM modulation index and the channel spacing, ensures that the signal outputted from each ONU, at a channel frequency band other than the one assigned to that ONU, will be at a level which is at least a predetermined amount below the channel frequency band of another ONU of the network. Thus, the low pass filters (59, 91) of the ONUs ensure that the channel frequency band assigned to one ONU does not produce unacceptable adjacent channel interference (ACI) to the channel frequency band assigned to other ONUs.

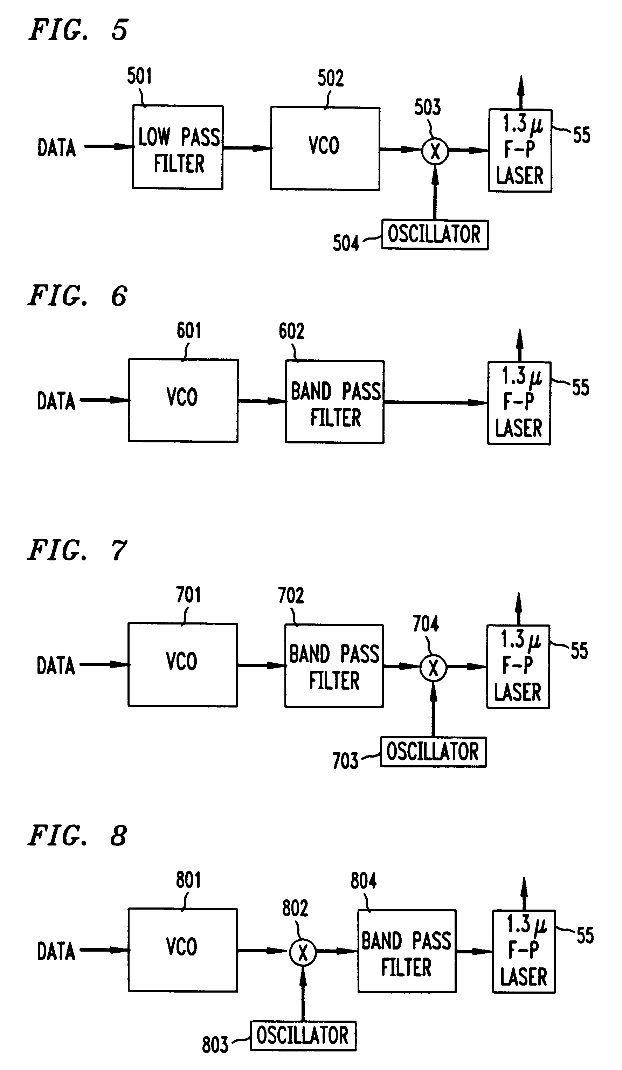

With reference to FIG. 4, we illustrate the reduction in the bit error rate versus receiver power in the 120 MHz channel for four cases: (1) no baseband filtering or interference (shown by 401); (2) baseband filtering, but no interference (shown by 402); (3) interference with no baseband filtering (shown by 403); and (4) interference with baseband filtering (shown by 404). Comparing curves 402 and 404 we see that when low pass filtering is used at each ONU, the adjacent channel interference causes only a 0.4 dB penalty in receiver sensitivity. When it is not used, there is an error floor of 2.4 × 10⁻¹ if the low pass filter is not used. When the filter is used, the receiver sensitivity is -38.0 dBm, for an ACI penalty of only 0.4 dB. For a laser output power of -6 dBm, assuming a loss budget of 24.4 dB, as has been specified for a typical 16-way PON, we observe a very satisfactory system margin of 7.6 dB. If a PON network under conditions of each stronger ACI is required, we could increase the channel spacing or decrease the cutoff frequency of the low pass filter.

While the present invention has been described using a low pass filter (LPF) in a frequency shift keying (FSK) transmitter unit, it can more generally be utilized to significantly reduce adjacent channel interference at the optical receiver of an optical network using a variety of electrical bandwidth limiting means in an optical transmitter which may utilize one of a variety of subcarrier modulation techniques. The paragraphs below describe the operation of the present invention when implemented using a variety of bandwidth limiting means such as LPF or bandpass filters (BPF) in optical transmitters which utilize frequency shift keying (FSK), binary phase shift keying (BPSK), quadrature phase shift keying (QPSK), and amplitude shift keying (ASK) techniques.

With reference to FIG. 5, we describe an illustrative low pas filter (LPF) and mixer embodiment of an FSK transmitter unit for use in ONU 5. As shown, the 3 Mb/s baseband data input signal is filtered by LPF 501 and is used to modulate VCO 502 to form a first modulated subcarrier signal. This signal is inputted to mixer 503 where it is multiplied by oscillator 504's signal to form a second modulated subcarrier signal which is used to directly modulate laser 55. According to our invention, LPF 501 has a transfer function which filters the input data signal so that the resulting power density spectrum of the modulated carrier signal outputted from VCO 502 includes substantially all of the main lob and significantly attenuated side lobes of the modulated carrier, as shown in FIG. 3. At the head end terminal HDT 2, suitable well-known circuitry is used to recover the 3 Mb/s baseband data signal.

With reference to FIG. 6, we describe a bandpass filter (BPF) embodiment of a FSK transmitter unit. The data input signal modulates VCO 601 to form a modulated subcarrier signal. This signal is filtered by BPF 602 and is used to modulate laser 55. According to our invention, BPF 602 has a signal transfer characteristic which substantially passes the main lobe and attenuates the side lobes of the modulated subcarrier signal. Again, at head end terminal HDT 2, suitable circuitry is used to recover the data input signal.

Shown in FIG. 7 is an illustrative FSK transmitter unit which utilizes VCO 701, bandpass filter (BPF) 702, oscillator 703 and mixer 704 to generate a second modulated subcarrier signal which modulates laser 55. BPF 702 operates in the same manner as BPF 602 of FIG. 6.

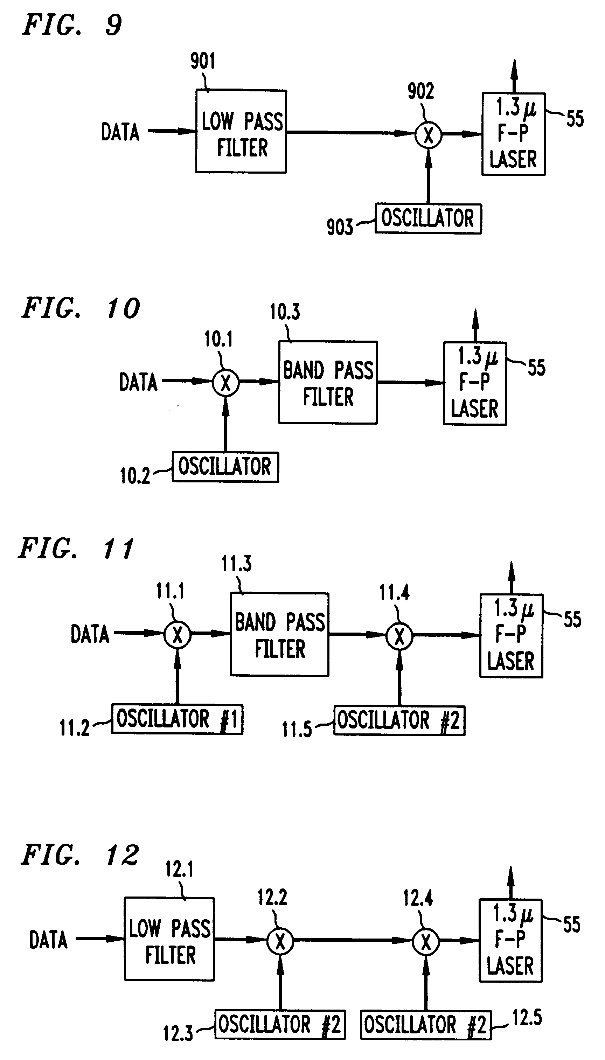

Shown in FIG. 8 is another BPF and mixer embodiment of an FSK transmitter unit. The data input signal modulates VCO 801, is mixed in mixer 802 with a signal from oscillator 803 to form a second modulated subcarrier signal which is filtered by BPF 804 and is used to modulate laser 55. The BPF 804 has a signal transfer characteristic which substantially passes the main lobe and attenuates the side lobes of the second modulated subcarrier signal.

With reference to FIG. 9, we describe an illustrative binary phase shift keying (BPSK) transmitter unit which can be utilized in ONU 5. It should be noted that the input baseband data signal to all BPSK and QPSK transmitter units has one polarity for a logic 0 signal and an opposite polarity for a logic 1 signal. This input data signal is sent through low pass filter 901. In mixer 902, the filtered data is multiplied by a signal from oscillator 903 to form a BPSK signal, which is used to modulate laser 55. For a PON, oscillator 903 would be used to select the proper carrier frequency. The LPF 901 has a transfer function which filters the input data signal so that the resulting power density spectrum of the modulated carrier signal outputted out of mixer 902 includes substantially all of the main lobe and significantly attenuated side lobe of the modulated carrier signal. At the head end terminal HDT 2, suitable well-known circuitry is used in discriminator 28 to recover the input data signal.

Shown in FIG. 10 is a BPSK transmitter unit which utilizes a bandpass filter. The input data is multiplied in mixer 10.1 using a signal from oscillator 10.2 to generate a BPSK signal which is then filtered by BPF 10.3 and used to modulate laser 55. BPF 10.3 has a signal transfer characteristic which substantially passes the main lobe and attenuates the side lobes of the BPSK modulated signal outputted from mixer 10.1. Again, head end terminal HDT 2 has circuitry to recover the data input signal.

Shown in FIG. 11 is a BPSK transmitter unit utilizing two mixers 11.1 and 11.4. This circuit generates a BPSK signal at some intermediate frequency of oscillator 11.2 and then uses an oscillator 11.5 to select the final subcarrier frequency. BPF 11.3 can be utilized as shown but may also be inserted at the output of mixer 11.4 BPF 11.3 has a signal transfer characteristic which substantially passes the main lobe and attenuates the side lobes of the subcarrier signal outputted from mixer 11.1. Head end terminal HDT 2 includes circuitry to recover the data input signal.

Shown in FIG. 12 is another embodiment of a BPSK transmitter. In this circuit, the data input signal is passed through LPF 12.1 and mixed in mixer 12.2 with a signal from oscillator 12.3. LPF 12.1 operates in the manner described for LPF 901 of FIG. 9. The resulting subcarrier signal is mixed in mixer 12.4 with a signal from oscillator 12.5 to form a second subcarrier signal used to modulate laser 55.

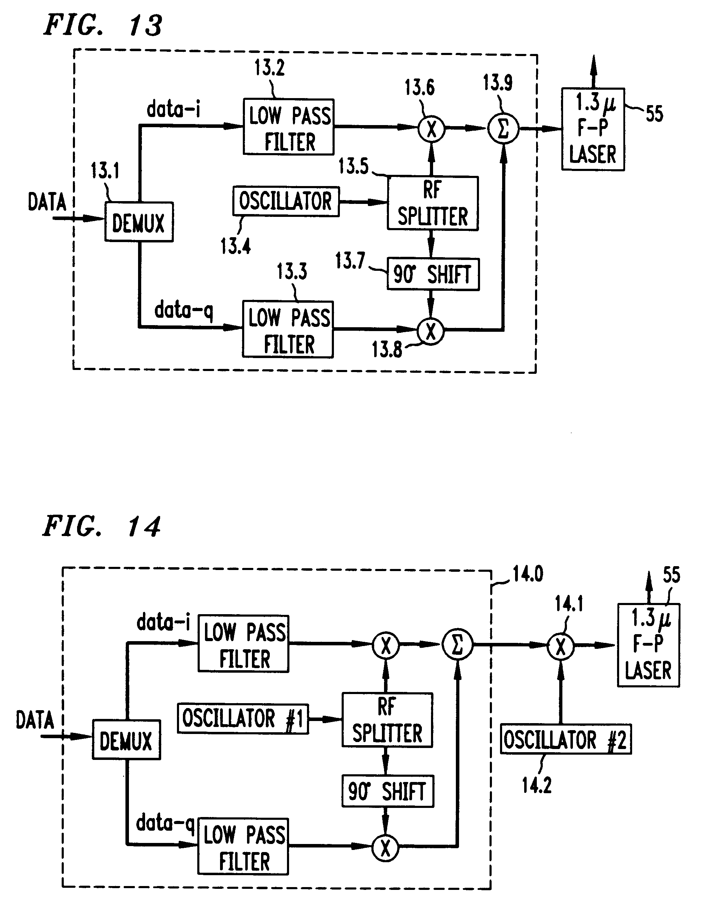

With reference to FIGS. 13 through 17, we describe illustrative quadrature phased shift keying (QPSK) type transmitter units which may be utilized in ONU 5 of FIG. 1. As shown in FIG. 13, a data input signal (dual polarity) is demultiplexed by demultiplexer 13.1 so that bits are alternately assigned to the in-phase data stream (data-i) or the quadrature-phase data stream (data-q). Each data stream then passes through low pass filter 13.2 or 13.3. An oscillator 13.4 produces an RF signal, which is split in power splitter 13.5. Half of the RF signal of splitter 13.5 is used to multiply the data-i stream using mixer 13.6. The other half of the RF signal of splitter 13.5 undergoes a 90° phase shift in shifter 13.7 and is used to multiply the data-q stream using mixer 13.8. This QPSK transmitter is essentially two of the BPSK transmitter units of FIG. 9, except that one of them has a 90° phase shifter 13.7. The output of mixers 13.6 and 13.8 are added in summer 13.9 to produce a subcarrier signal that modulates laser 55. LPF 13.2 and 13.3 have a signal transfer characteristic which substantially passes the main lobe and attenuates the side lobes of the modulated subcarrier signal outputted from mixers 13.6 and 13.8. At head end terminal HDT 2 suitable well-known circuitry is used to recover the input data signal.

FIG. 14 shows another QPSK transmitter unit which is similar to that shown in FIG. 13 except that it multiplies the modulated subcarrier signal output of circuit 14.0 in mixer 14.1 using the signal of oscillator 14.2 to form a second modulated subcarrier signal which is used to modulate laser 55. LPFs of circuit 14.0 operate in the same manner as LPF 13.2 and 13.3 of FIG. 13.

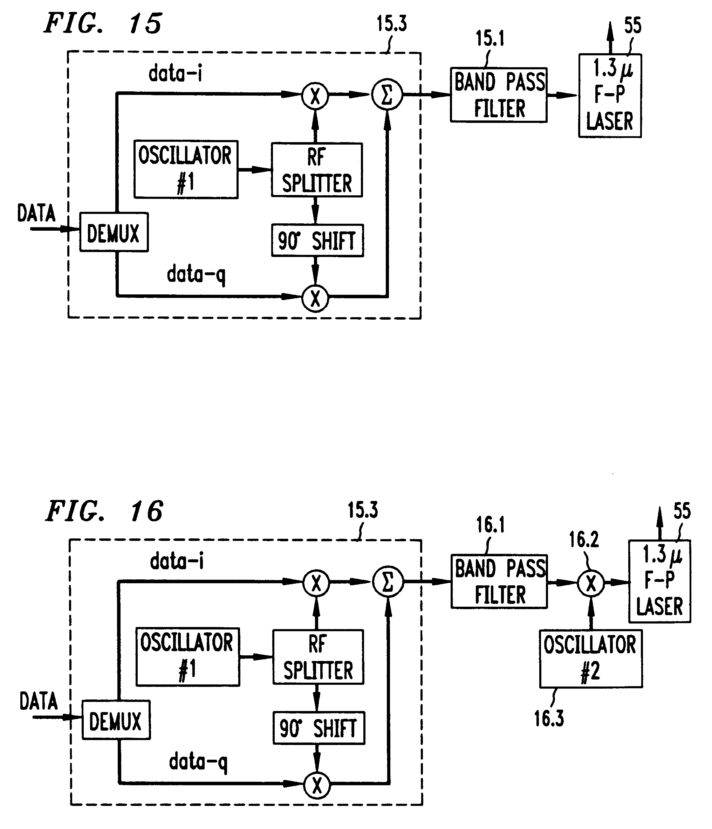

Shown in FIG. 15 is a circuit similar to that shown in FIG. 13 except that a bandpass filter BPF 15.1 is used instead of the LPF 13.2 and 13.3.

Shown in FIG. 16 is a QPSK transmitter unit similar to that of FIG. 15 except that it uses an additional mixer 14.1 and oscillator 14.2 as in FIG. 14.

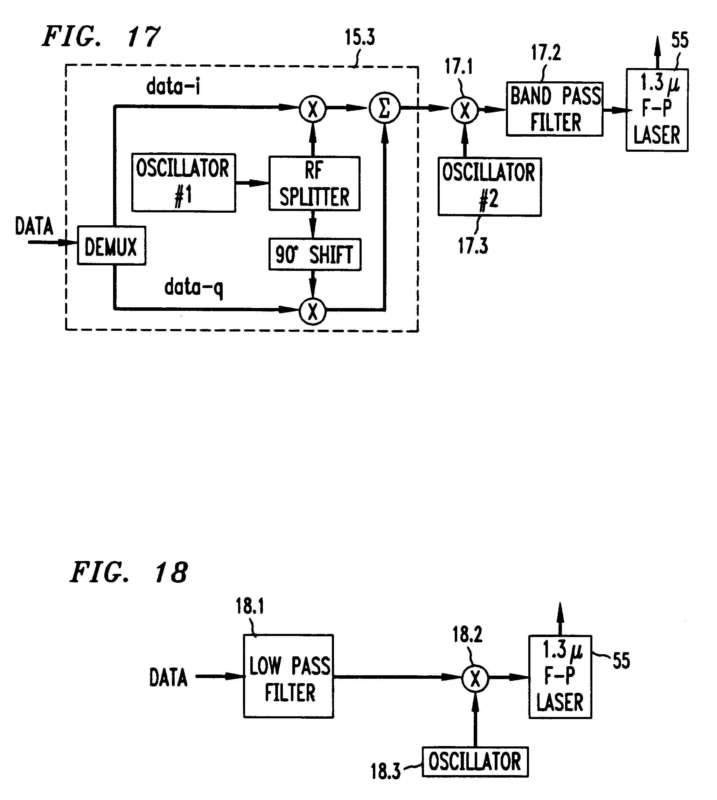

Shown in FIG. 17 is a QPSK transmitter unit of FIG. 14 which additionally utilizes a BPF, as utilized in FIG. 15, prior to laser 55. In FIGS. 14 through 17, suitable circuitry is utilized at the head end terminal HDT 2 to recover the input data signal.

Shown in FIG. 18 is an amplitude shift keying (ASK) transmitter unit. The 3 Mb/s data input signal is a binary unipolar signal which is filtered by the LPF 18.1. It is then input to the mixer 18.2, where it is translated to the frequency determined by the oscillator 18.3 to form a modulated ASK subcarrier signal which is used to directly modulate the laser 55.

It is contemplated that the wavelengths described in FIG. 1 for the wavelength division multiplexing can be reversed so that the outbound service is transmitted at a lower wavelength than the inbound service. It should be understood by persons skilled in the art that the number of subscribers (ONUs) can be increased or decreased with the concomitant change in the number of terminals, the size of the passive pedestal, the multiplexing capability of multiplexer 22, and the number of demultiplexers in the inbound services receiver. Moreover, while the present invention has been described as utilizing an FM modulation index of 9.5, the described PON network will function effectively using index values up to approximately 0.8.

Additionally, while the present invention has been described using optical lasers in the transmitters, the invention can more generally be utilized with other types of optical sources such as light emitting diodes (LEDs).

It will be recognized that, although the present invention has been described for a system using binary signaling, groups of bits can be encoded into multilevel symbols, thereby achieving a higher data throughput rate.

Although the present invention has disclosed techniques for the elimination of adjacent channel interference, the invention can more generally be used to reduce interchannel interference between channels that are not adjacent. Generally, the interference is highest between adjacent channels, but significant benefit is also realized in optical networks by reducing all interchannel interference.

What has been described is merely illustrative of the application of the principles of the present invention. Other arrangements and methods can be implemented by those skilled in the art without departing from the scope of the present invention.

## Claims

1. An optical transmitter CHARACTERIZED BY
means for generating (57) a modulated electrical subcarrier signal in response to an electrical input signal, said generating means including electrical bandwidth limiting means for narrowing the bandwidth of the modulated electrical subcarrier signal to a predetermined power density spectrum, and
means for modulating (57, 55) an optical source using the modulated electrical subcarrier signal.

2. An optical transmitter CHARACTERIZED BY
means for generating (57) a modulated electrical subcarrier signal in response to an input signal, said modulated electrical subcarrier signal having a predetermined power density spectrum characteristic which includes all of the main lobe and attenuated side lobes of the modulated electrical subcarrier signal, and
means for modulating (57, 55) an optical source using the modulated electrical subcarrier signal.

3. The optical transmitter of claim 1 or 2 CHARACTERIZED IN THAT
said modulated electrical subcarrier signal is modulated using at least one modulation type selected from a group including at least frequency shift keying (FSK), binary phase shift keying (BPSK), quadrature phase shift keying (QPSK), and amplitude shift keying (ASK).

4. The optical transmitter of claim 3 CHARACTERIZED IN THAT
said predetermined power density spectrum characteristic is determined by a filter selected from a group including at least a low pass filter and bandpass filter.

5. The optical transmitter of claim 1 CHARACTERIZED IN THAT
said generating means includes
low pass filter, having a predetermined 3 dB cutoff frequency of N, for filtering a received baseband input data signal, having an M symbol per second data rate, to produce an intermediate signal, where N/M is less than one, and
modulating means for frequency shift key modulating the electrical subcarrier frequency using said intermediate signal to form a frequency modulated electrical subcarrier signal for modulating the optical source.

6. An optical network CHARACTERIZED BY
a plurality of electrical subcarrier modulated optical transmitters (5, 9) for transmitting modulated electrical subcarrier signals, at least two optical transmitters operating at different electrical subcarrier frequencies;
an optical receiver (2) for receiving one or more modulated electrical subcarrier signals from the optical transmitters;
wherein at least one of the optical transmitters (5) includes
electrical means for limiting (59) the interchannel interference in the receiver to smaller than a predetermined value below the lowest level of a modulated electrical subcarrier signal received from any of the optical transmitters.

7. The optical network of claim 6 CHARACTERIZED IN THAT
the limiting means narrows the bandwidth of the modulated electrical subcarrier signal.

8. The optical network of claim 7 CHARACTERIZED IN THAT
the electrical limiting means includes
means for generating a modulated electrical subcarrier signal at a subcarrier frequency in response to an input signal, said modulated electrical subcarrier signal having a substantially reduced power density spectrum characteristic at frequencies more than 0.5 times a channel spacing, and
means for modulating an optical source using the modulated electrical subcarrier signal.

9. The optical network of claim 7 CHARACTERIZED IN THAT
the limiting means includes
means for generating a modulated electrical subcarrier signal in response to an input signal, said modulated electrical subcarrier signal having a predetermined power density spectrum characteristic which includes all of the main lobe and attenuated side lobes of the modulated electrical subcarrier signal, and
means for modulating an optical source using the modulated electrical subcarrier signal.

10. The optical network of claim 6 CHARACTERIZED IN THAT
the limiting means is a bandpass filter for passing a modulated intermediate frequency signal inputted to said at least one of the optical transmitters.

11. An optical network CHARACTERIZED BY
a head end terminal (2) and a plurality of optical network units (5, 9) (ONUs) connected over an optical transmission medium, at least two ONUs transmitting a modulated optical signal modulated at a different electrical subcarrier frequency channel, said at least two ONUs comprising
low pass filter (59) for filtering a received baseband input data signal to produce an intermediate signal,
modulator means ( 57) for frequency shift key modulating a different electrical subcarrier signal at a preselected FM modulation index using said intermediate signal to form a different modulated electrical subcarrier channel used to modulate an optical source to generate a modulated optical signal,
wherein each of the electrical subcarrier channels has a minimum predefined channel spacing from each of the other electrical subcarrier channels, and
wherein said low pass filter has a filter characteristic selected depending on the preselected FM modulation index and the minimum channel spacing to produce an interchannel interference signal at the head end terminal that is smaller than a predetermined value below the level of different electrical subcarrier channel signals from the other ONUs received at the head end terminal.

12. The optical network of claim 11 CHARACTERIZED IN THAT
each low pass filter at each ONU has a filter characteristic so that a combined signal formed by the interchannel interference signal and any noise signal on the transmission medium is greater than the predetermined value below the level of the different electrical subcarrier channel signals of the other ONUs.

13. The optical network of claim 11 CHARACTERIZED IN THAT
each low pass filter has a 3 dB cutoff frequency of N and the baseband input data signal has an M bit data rate, where N/M is less than one.
